# EUROPÄISCHE PATENTSCHRIFT

(11) **EP 2 821 263 B1**
(45) Veröffentlichungstag und Bekanntmachung des Hinweises auf die Patenterteilung: **07.08.2019**
(21) Anmeldenummer: 14173572.0
(22) Anmeldetag: 24.06.2014
(51) Int. Cl.: B60B 35/12, B60G 7/00, B60G 9/00, B60B 35/00, B60B 35/08, B60B 35/16

(54) **Achse für ein Nutzfahrzeug, Achsaggregat und Nutzfahrzeug mit einer derartigen Achse**
Axle for a commercial vehicle, axle assembly and a commercial vehicle with such an axle
Axe pour un véhicule utilitaire, essieu et véhicule utilitaire équipé d'un tel axe

(30) Priorität: 04.07.2013 DE 102013107050
(43) Veröffentlichungstag der Anmeldung: 07.01.2015
(73) Patentinhaber: Kögel Trailer GmbH, 89349 Burtenbach (DE)
(72) Erfinder: Bayer, Bernhard, 83550 Emmering (DE)
(74) Vertreter: Meissner Bolte Partnerschaft mbB

(56) Entgegenhaltungen:
- EP-A1- 2 130 688
- EP-B1- 2 355 988
- WO-A1-98/17487
- DE-A1-102006 049 390
- DE-A1-102012 103 961
- US-A- 5 203 585
- US-A1- 2011 227 308
- US-B1- 6 241 266

## Beschreibung

Die Erfindung betrifft eine Achse für ein Nutzfahrzeug gemäß dem Oberbegriff des Patentanspruchs 1. Ferner betrifft die Erfindung ein Achsaggregat und ein Nutzfahrzeug mit einer derartigen Achse. Eine Achse der eingangs genannten Art ist beispielsweise aus EP 2 355 988 B1 bekannt.

Achsen für Nutzfahrzeuge bestehen aus mehreren Elementen und umfassen insbesondere ein Achsrohr und einen Achslenker. Über den Achslenker kann das Achsrohr mit einem Rahmen des Nutzfahrzeugs verbunden werden. Im Betrieb wirken auf die Achse unterschiedliche Kräfte, die über das Achsrohr und den Achslenker abzuleiten sind. Insbesondere treten bei Kurvenfahrt Torsionsmomente auf, wodurch die gesamte Achse verdreht wird. Bei Bremsvorgängen entsteht hingegen ein hohes Drehmoment, das auf längsaxialen Enden des Achsrohrs einwirken. Die Masse des Nutzfahrzeugaufbaus erzeugt lineare Kräfte, die auf die Achse einwirken.

Um die auftretenden Drehmomente und Axialkräfte vom Achsrohr auf den Achslenker zu übertragen, werden unterschiedliche Ansätze verfolgt. Einerseits ist aus der Praxis bekannt, das Achsrohr unter Presspassung mit dem Achslenker zu verbinden und gleichzeitig zu verschweißen. Eine solche Lösung beschreibt beispielsweise WO 98/17487 A1. Der Nachteil der Schweißverbindung besteht darin, dass zur Herstellung der Achse teure Schweißroboter bzw. Schweißanlagen erforderlich sind. Die unregelmäßige Struktur der Schweißnähte kann zudem zu einer erhöhten Korrosionsgefahr führen. Zudem ist eine erhöhte Qualitätskontrolle erforderlich, da Schweißverbindungen bruchgefährdet sind. Besonderes Augenmerk ist auch auf eine exakte Ausrichtung der Komponenten zu legen, was den Einsatz von besonderen Montagevorrichtungen erfordert.

EP 2 355 988 B1 beschreibt hingegen eine formschlüssige Verbindung zwischen Achsrohr und Achslenker, wobei das Achsrohr als Vierkantrohr ausgeführt ist und in einem komplementär geformten, zweiteiligen Achslenker eingespannt wird. Dabei weist der Achslenker zusätzlich eine Zahnstruktur auf, die sich in das Material des Achsrohrs eindrückt und so einen Formschluss sowohl in Umfangsrichtung des Achsrohrs, als auch in Längsrichtung des Achsrohrs bewirkt.

Die Verwendung eines Vierkantrohrs als Achsrohr in Verbindung mit einem entsprechend geformten Achslenker erhöht den Herstellungsaufwand, da Sonderformen von Achslenkern und Achsrohren zu erzeugen sind. Dazu ist eine Vielzahl von Einzelteilen erforderlich, beispielsweise zwei separate Bauteile für den Achslenker, wodurch sich ein hoher Montageaufwand ergibt.

Bei den vorbekannten Ansätzen zur Kraftübertragung vom Achsrohr auf den Achslenker werden sowohl die auftretenden Drehmomente, als auch die auftretenden Axialkräfte gebündelt an einer Verbindungsstelle zwischen Achslenker und Achsrohr übertragen. Die im Betrieb auftretenden Belastungen konzentrieren sich also auf eine Stelle an der Verbindung zwischen Achse und Achslenker, was die Gefahr der Rissbildung an der Achse oder am Achslenker und das Risiko von Achsbrüchen erhöht.

Die Aufgabe der Erfindung besteht darin, eine Achse für ein Nutzfahrzeug anzugeben, die eine verbesserte Stabilität aufweist und einfach sowie kostengünstig herstellbar ist. Ferner besteht die Aufgabe der Erfindung darin, ein Achsaggregat und ein Nutzfahrzeug mit einer derartigen Achse anzugeben.

Erfindungsgemäß wird diese Aufgabe im Hinblick auf die Achse durch den Gegenstand des Patentanspruchs 1, im Hinblick auf das Achsaggregat durch den Gegenstand des Patentanspruchs 14 und im Hinblick auf das Nutzfahrzeug durch den Gegenstand des Patentanspruchs 15 gelöst.

So beruht die Erfindung auf dem Gedanken, eine Achse für ein Nutzfahrzeug mit einem Achsrohr und wenigstens einem Achslenker anzugeben, der durch wenigstens ein Kraftübertragungsmittel mit dem Achsrohr verbunden ist. Das Kraftübertragungsmittel ist mit dem Achsrohr erfindungsgemäß durch eine Formschlussverbindung zur Übertragung eines Moments und durch eine Klemmverbindung zur Übertragung einer Normalkraft verbunden. Dabei sind die Formschlussverbindung und die Klemmverbindung in Längsrichtung des Achsrohrs voneinander beabstandet angeordnet.

Hinter der Erfindung steht die Idee, die Übertragung von Drehmomenten vom Achsrohr auf den Achslenker und die Übertragung von Normalkräften, die beispielsweise aus der Gewichtskraft des Nutzfahrzeugaufbaus resultieren können, örtlich voneinander zu trennen. Insbesondere werden auftretende Momente, die zu einer Torsion der Achse führen können, hauptsächlich über die Formschlussverbindung vom Achsrohr auf den Achslenker übertragen. Die von der Formschlussverbindung und/oder dem Achslenker beabstandete Klemmverbindung überträgt hauptsächlich Normalkräfte. Dabei ist nicht ausgeschlossen, dass auch die Klemmverbindung Torsionskräfte überträgt, dies jedoch in einem geringeren Maß als die Formschlussverbindung. Die örtliche Trennung der Kraftübertragungen reduziert die Riss- und/oder Bruchgefahr. Somit wird die Stabilität der erfindungsgemäßen Achse erhöht.

Die vorgenannten Vorteile werden im Allgemeinen auch erreicht, wenn die Formschlussverbindung zwischen Achsrohr und Kraftübertragungsmittel vom Achslenker beabstandet angeordnet ist. Dies gilt unabhängig von der Lage der Klemmverbindung zwischen Achsrohr und Kraftübertragungsmittel.

Bei einer bevorzugten Ausgestaltung der erfindungsgemäßen Achse ist zwischen dem Achsrohr und dem Achslenker ein Adapter angeordnet, der das Kraftübertragungsmittel bildet. Der Adapter kann insbesondere als Adapterplatte ausgebildet sein. Der Adapter ermöglicht eine einfache Trennung zwischen der Formschlussverbindung und der Klemmverbindung. Gleichzeitig wird durch den Adapter erreicht, dass die Achse insgesamt einfach und schnell montierbar ist. Zudem zeichnet sich die Achse durch eine geringe Anzahl von Einzelbauteilen aus, wodurch Lagerkosten und Platzbedarf reduziert werden. Der Adapter erleichtert außerdem den Austausch einzelner Komponenten der Achse.

Durch die Verwendung eines Kraftübertragungsmittels, das eine Formschlussverbindung und/eine Klemmverbindung bereitstellt, kann auf eine Schweißverbindung verzichtet werden. Dadurch ist es möglich, die einzelnen Teile der Achse, insbesondere das Achsrohr und den Achslenker, getrennt voneinander zu beschichten, beispielsweise mit einer korrosionsbeständigen Beschichtung. So können Achsrohr und Achslenker getrennt voneinander hergestellt und anschließend miteinander montiert werden, wobei eine hohe Korrosionsbeständigkeit beibehalten wird.

Im Allgemeinen kann der Adapter plattenartig ausgebildet sein. Insbesondere bildet der Adapter eine Adapterplatte. Die plattenartige Struktur des Adapters ist durch eine im Wesentlichen gleichmäßige Stärke bzw. Dicke des Adapters bestimmt. Grundsätzlich kann die Adapterplatte gekrümmt und/oder gebogen sein. Die Adapterplatte weist zumindest großteils eine im Wesentlichen konstante Plattenstärke auf.

Der Adapter, insbesondere die Adapterplatte, kann einen Eingriffsabschnitt aufweisen, der die Formschlussverbindung mit dem Achsrohr bildet und durch einen Distanzabschnitt von einem Klemmabschnitt des Adapters getrennt ist, der die Klemmverbindung mit dem Achsrohr bildet. Der Distanzabschnitt zwischen dem Eingriffsabschnitt und dem Klemmabschnitt gewährleistet eine Trennung der Drehmomentübertragung von der Normalkraftübertragung.

Die Formschlussverbindung kann im Allgemeinen eine Verzahnung und/oder Stiftverbindung und/oder Passfederverbindung umfassen. Alternativ oder zusätzlich kann die Formschlussverbindung eine Schraubverbindung und/oder eine Bolzenverbindung aufweisen. Grundsätzlich sind alle formschlüssigen Verbindungen denkbar, die Momente bzw. rotierende Kräfte aufnehmen. In einer bevorzugten Ausgestaltung der Erfindung ist vorgesehen, dass der Adapter, insbesondere der Eingriffsabschnitt, eine Adapterverzahnung aufweist, die in eine komplementäre Verzahnung des Achsrohrs eingreift. Eine derartige Reduzierung des Formschlusses ist besonders einfach herstellbar und bewirkt eine effiziente Übertragung von Drehmomenten. Dazu ist die Formschlussverbindung vorzugsweise drehfest.

Die Adapterverzahnung und die Achsverzahnung können koaxial zu einer Längsachse des Achsrohrs ineinander greifen. Mit anderen Worten können die Adapterverzahnung und die Achsverzahnung derart angepasst sein, dass zur Erzeugung des Formschlusses der Adapter parallel zur Längsachse des Achsrohrs verschoben wird, um die Adapterverzahnung mit der Achsverzahnung zu fügen bzw. die Adapterverzahnung in die Achsverzahnung eingreifen zu lassen. Die Längsachse des Achsrohrs erstreckt sich dabei in Achsrichtung. Durch die koaxiale Anordnung der Adapterverzahnung und der Achsverzahnung wird eine besonders kompakte Bauweise der Formschlussverbindung erreicht. Außerdem erleichtert die koaxiale Anordnung die Herstellung der erfindungsgemäßen Achse.

Im Allgemeinen kann die Formschlussverbindung, insbesondere die Achsverzahnung, an einem Achsschenkel und/oder einem Bremssattelträger des Achsohrs angeordnet sein. Zweckmäßigerweise werden die dort auftretenden Drehmomente möglichst nah an ihrem Ursprungsort vom Achsrohr abgegriffen. Dies reduziert die Belastung des Achsrohrs und erhöht somit die Stabilität der gesamten Achse.

Der Adapter, insbesondere der Klemmabschnitt kann mit wenigstens einem Federbügel verbunden sein, der das Achsrohr umgreift. Der Federbügel ermöglicht auf einfache Weise eine klemmende Verbindung des Adapters mit dem Achsrohr. Zur Verbesserung der Klemmverbindung, insbesondere zur Erhöhung der Kontaktfläche zwischen dem Federbügel und dem Achsrohr kann zusätzlich ein Anpressteil vorgesehen sein, dass zwischen dem Federbügel und dem Achsrohr angeordnet ist. Das Anpressteil weist vorzugsweise eine Länge auf, die größer als die Breite des Federbügels ist. Insbesondere kann die Länge des Anpressteils der Länge des Klemmabschnitts entsprechen. Das Anpressteil kann mehreren Federbügeln zugeordnet sein.

Der Distanzabschnitt, der vorzugsweise zwischen dem Eingriffsabschnitt und dem Klemmabschnitt des Adapters angeordnet ist, dient zur Übertragung des vom Eingriffsabschnitt aufgenommenen Moments auf den Klemmabschnitt und somit weiter auf den Achslenker. Zur Stabilisierung des Distanzabschnitts kann vorgesehen sein, dass dieser eine Materialverstärkung aufweist. Die Materialverstärkung kann derart geformt sein, dass einer Torsion des Adapters, insbesondere des Distanzabschnitts, entgegengewirkt wird. Insgesamt verbessert dies die Kraft- bzw. Momentübertragung.

Der Adapter, insbesondere die Adapterplatte, ist vorzugsweise zumindest teilweise halbrohrförmig ausgebildet. So passt sich der Adapter gut an die Form des Achsrohrs an und lässt sich leicht mit dem Achsrohrverbindungen, insbesondere verklemmen. Die halbrohrförmige Ausbildung des Adapters ermöglicht auch die einfache Verbindung des Adapters mit dem Achslenker, der dazu lediglich eine entsprechend gewölbte Achsrohraufnahme aufzuweisen hat.

Mit dem Achslenker ist der Adapter, insbesondere der Klemmabschnitt, vorzugsweise fest verbunden. Insbesondere kann der Adapter bzw. dessen Klemmabschnitt mit dem Achslenker verschweißt und/oder verklemmt sein. Die Formschlussverbindung zwischen dem Adapter und dem Achsrohr ist vorzugsweise von der geklemmten oder geschweißten Verbindung zwischen dem Adapter und dem Achslenker beabstandet.

Vorzugsweise weist der Achslenker zur formschlüssigen Verbindung mit dem Adapter einen Schlitz auf, in den im montierten Zustand des Adapters ein Flansch des Adapters, insbesondere der Adapterplatte, eingreift. Die formschlüssige Verbindung zwischen Adapter und Achslenker gewährleistet eine sichere Krafteinleitung in den Achslenker.

Ein nebengeordneter Aspekt der Erfindung betrifft ein Achsaggregat für ein Nutzfahrzeug mit einer zuvor beschriebenen Achse. Ferner wird im Rahmen der Erfindung ein Nutzfahrzeug mit einer zuvor beschriebenen Achse und/oder einem vorher genannten Achsaggregat offenbart und beansprucht.

Außerdem wird im Rahmen der vorliegenden Anmeldung ferner ein Achslenker für eine zuvor beschriebene Achse offenbart und beansprucht, wobei der Achslenker eine, insbesondere im Wesentlichen rechteckige, Ausformung zur formschlüssigen Aufnahme eines mit einem Achsrohr verbundenen Adapters aufweist. Die Ausformung ist im Wesentlichen rechtwinklig zu einer Längserstreckung des Achslenkers ausgebildet. Die rechteckige Ausformung gewährleistet eine gute formschlüssige Verbindung und ermöglicht insbesondere eine gute Übertragung von Torsionskräften.

Die Erfindung wird im Folgenden anhand eines Ausführungsbeispiels unter Bezugnahme auf die beigefügten, schematischen Zeichnungen näher erläutert. Darin zeigen:
- Fig. 1:: eine perspektivische Teilansicht einer erfindungsgemäßen Achse nach einem bevorzugten Ausführungsbeispiel;
- Fig. 2:: eine Teilansicht der Achse gemäß Fig. 1, wobei aus Gründen der Übersichtlichkeit auf die Darstellung des Achslenkers verzichtet ist;
- Fig. 3:: eine perspektivische Darstellung der Achse gemäß Fig. 1, wobei, auf die Achse einwirkende Kräfte dargestellt sind;
- Fig. 4:: eine perspektivische Darstellung einer erfindungsgemäßen Achse nach einem weiteren bevorzugten Ausführungsbeispiel;
- Fig. 5:: eine Seitenansicht der Achse gemäß Fig. 4;
- Fig. 6:: eine Detailansicht der Achse gemäß Fig. 5;
- Fig. 7:: eine Längsschnittansicht der Achse entlang der Linie B-B in Fig. 5;
- Fig. 8:: eine Draufsicht auf die Achse gemäß Fig. 4; und
- Fig. 9:: eine Querschnittsansicht der Achse entlang der Linie A-A in Fig. 8.

Die in den Figuren dargestellte Achse umfasst im Allgemeinen ein Achsrohr 10, einen Achslenker 20 und ein Kraftübertragungsmittel 30. Das Achsrohr 10 ist mittels des Kraftübertragungsmittels 30 mit dem Achslenker 20 verbunden. Die Verbindung zwischen dem Achsrohr 10 und dem Kraftübertragungsmittel 30 erfolgt einerseits formschlüssig durch die Formschlussverbindung 15. Die Formschlussverbindung 15 ist insbesondere drehfest, so dass eine Rotation des Achsrohrs 10 auf das Kraftübertragungsmittel 30 übertragen wird. Andererseits besteht zwischen dem Kraftübertragungsmittel 30 und dem Achsrohr 10 eine reibschlüssige bzw. kraftschlüssige Verbindung, die insbesondere als Klemmverbindung 16 ausgebildet ist. Wie nachfolgend näher erläutert wird, ist die Klemmverbindung 16 von der Formschlussverbindung 15 beabstandet angeordnet. Der Abstand zwischen der Formschlussverbindung 15 und der Klemmverbindung 16 besteht in Längsrichtung des Achsrohrs 10, also in Achsrichtung.

Die Achse weist ferner einen Achsschenkel 11 auf, der am axialen Längsende des Achsrohrs 10 angeordnet ist. Vorzugsweise sind an beiden Axialenden des Achsrohrs 10 Achsschenkel 11 vorgesehen. Die Achsschenkel 11 sind fest mit dem Achsrohr 10 verbunden, insbesondere verschweißt, und weisen gegenüber dem Achsrohr 10 einen kleineren Querschnittsdurchmesser auf. In diesem Zusammenhang wird darauf hingewiesen, dass das Achsrohr 10 im Wesentlichen ein Rundrohr bildet bzw. einen kreisförmigen Querschnitt aufweist. Das Achsrohr 10 bildet im Wesentlichen eine zylinderförmige Rohrform. Dabei kann das Achsrohr 10 innen hohl oder aus einem Vollmaterial gebildet sein.

Der Achsschenkel 11 ist dazu angepasst, eine Nabe für ein Rad des Nutzfahrzeugs aufzunehmen. Zwischen dem Achsschenkel 11 und dem Achsrohrs 10 ist ein Bremssattelträger 12 angeordnet. Der Bremssattelträger 12 kann einteilig bzw. einstückig mit dem Achsrohr 10 oder dem Achsschenkel 11 ausgebildet sein. Es ist auch möglich, dass der Bremssattelträger 12 ein separates Bauteil bildet, das fest, insbesondere drehfest mit dem Achsrohr 10 verbunden ist. Der Bremssattelträger 12 ist zur Aufnahme von Bremssätteln angepasst, die mit Bremsscheiben zusammenwirken, die an einem Rad bzw. einer Nabe für ein Rad angeordnet sind.

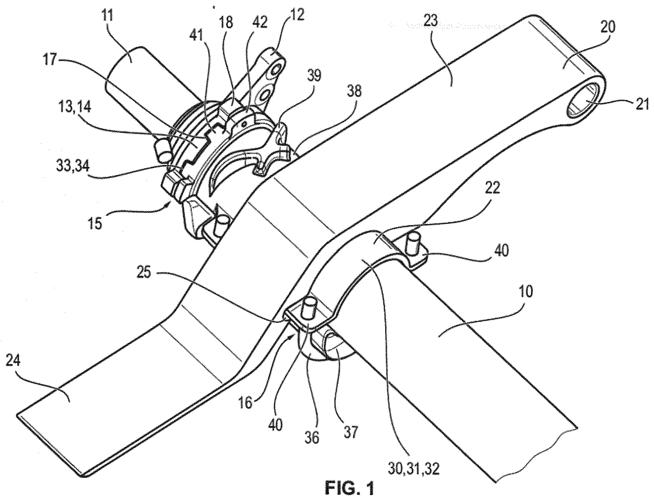

Wie in Fig. 1 gut erkennbar ist, weist das Achsrohr 10 im Bereich des Bremssattelträgers 12 eine Achsverzahnung 13 auf. Konkret ist im Bereich des Bremssattelträgers 12 ein ringförmiger Vorsprung 14 ausgebildet, der in Umfangsrichtung voneinander beabstandete Ausnehmungen 17 aufweist. Die Ausnehmungen 17 erstrecken sich in Achsrichtung bzw. in Längsrichtung des Achsrohrs 10. Ferner sind in Umfangsrichtung beabstandet zueinander angeordnete radiale Vorsprünge 18 vorgesehen, die über den ringförmigen Vorsprung 14 radial vorstehen. Die radialen Vorsprünge 18 umfassen Aufnahmebohrungen für Sicherungsmittel. Die Funktion der radialen Vorsprünge 18 wird später im Zusammenhang mit der Formschlussverbindung 15 näher erläutert.

Der Achslenker 20 ist im Wesentlichen einstückig ausgebildet und weist eine mittige Achsrohraufnahme 22 auf, die zur Aufnahme des Achsrohrs 10 angepasst ist. Die Achsrohraufnahme 22 ist also ausreichend dimensioniert, um das Achsrohr 10 aufzunehmen. Das Achsrohr 10 liegt in der Achsrohraufnahme 22, wie in Fig. 1 gut erkennbar ist.

Der Achslenker 20 umfasst einen Schwenkabschnitt 23, der am Längsende des Achslenkers 20 ein Achslenkerlager 21 aufweist. Das Achslenkerlager 21 ist im Einbauzustand der Achse mit dem Rahmen des Nutzfahrzeugs drehbar verbunden. Der Schwenkabschnitt 23 erstreckt sich von der Achsrohraufnahme 22 zum Achslenkerlager 21. Der Achslenker 20 setzt sich von der Achsrohraufnahme 22 ausgehend fort und bildet einen Federabschnitt 24, der im Einbauzustand der Achse ein Federungselement, vorzugsweise einen Luftfederbalg, aufnimmt. Der Luftfederbalg liegt im Betriebszustand vorzugsweise auf dem Federabschnitt 24 des Achslenkers 20 auf. Die Schwenkbewegung des Schwenkabschnitts 23 bzw. insgesamt des Achslenkers 20 wird so abgefedert bzw. gedämpft. Um die Bauhöhe der Achse insgesamt zu verringern, ist der Federabschnitt 24 gegenüber dem Schwenkabschnitt 23 des Achslenkers 20 abgesenkt. So ist gewährleistet, dass zwischen dem Federabschnitt 24 und dem Nutzfahrzeugrahmen ausreichend Freiraum zur Platzierung eines Federelements verbleibt.

Zwischen dem Achsrohr 10 und dem Achslenker 20 ist ein Kraftübertragungsmittel 30 angeordnet, das bei dem dargestellten Ausführungsbeispiel als Adapter 31 bzw. Adapterplatte 32 ausgebildet ist. Der Adapter 31 wird nachfolgend als Adapterplatte 32 bezeichnet. Ausdrücklich wird darauf hingewiesen, dass das Kraftübertragungsmittel 30 nicht auf eine plattenartige Form eingeschränkt ist. Andersartige Kraftübertragungsmittel 30 bzw. Adapter 31 sind ebenfalls erfindungsgemäß verwendbar.

Die Adapterplatte 32 weist im Wesentlichen eine halbrohr- bzw. teilrohrförmige Querschnittsgeometrie auf. Insbesondere ist die Adapterplatte 32 derart geformt, dass sie unter Flächenpressung mit dem Achsrohr 10 verbindbar ist. Der Innenradius der Adapterplatte 32 entspricht im Wesentlichen dem Außenradius des Achsrohrs 10. Die Adapterplatte 32 umfasst ferner zwei seitlich vorstehende Flansche 40, die Bohrungen zur Aufnahme von Federbügeln 36 aufweisen. Die Flansche 40 erstrecken sich entlang eines Klemmabschnitts 35 der Adapterplatte 32 bzw. begrenzen diesen.

Im Allgemeinen ist die Adapterplatte 32 in drei relevante Abschnitte unterteilbar. Die Abschnitte sind in Längsrichtung des Achsrohrs 10 benachbart zueinander angeordnet bzw. gehen in Längsrichtung des Achsrohrs 10 ineinander über. Konkret weist die Adapterplatte 32 einen Klemmabschnitt 35, einen Distanzabschnitt 38 und einen Eingriffsabschnitt 33 auf. Der Klemmabschnitt 35 ist im Wesentlichen durch die Flansche 40 längsaxial festgelegt. Die Funktion des Klemmabschnitts 35 besteht darin, die Adapterplatte 32 klemmend, insbesondere kraft- bzw. reibschlüssig, mit dem Achsrohr 10 zu verbinden. Dazu ist bei dem dargestellten Ausführungsbeispiel vorgesehen, dass sich zwischen den gegenüberliegenden Flanschen 40 jeweils Federbügel 36 erstrecken, die das Achsrohr 10 umgreifen. Die Federbügel 36 können, beispielsweise durch entsprechende Schrauben oder Muttern, gegen das Achsrohr 10 gezogen werden, so dass der Klemmabschnitt 35 insgesamt mit dem Achsrohr 10 verklemmt wird. Um einen ausreichenden Flächenkontakt für eine feste Klemmverbindung 16 zu erreichen, kann vorgesehen sein, dass zwischen dem Federbügel 36 und dem Achsrohr 10 ein Anpressteil 37 angeordnet ist. Das Anpressteil 37 kann einen nierenförmigen Querschnitt aufweisen. Vorzugsweise weist das Anpressteil 37 einen Innenradius auf, der dem Außenradius des Achsrohrs 10 entspricht. Der Außenradius des Anpressteils 37 entspricht vorzugsweise dem Innenradius des Federbügels 36, so dass sowohl zwischen dem Federbügel 36 und dem Anpressteil 37, als auch zwischen dem Anpressteil 37 und dem Achsrohr 10 ein guter Kontakt besteht.

An einem Längsende der Adapterplatte 32 ist der Eingriffsabschnitt 33 angeordnet. Der Eingriffsabschnitt 33 umfasst eine Adapterverzahnung 34, die komplementär zur Achsverzahnung 13 des Achsrohrs 10 ausgebildet ist. Konkret weist die Adapterplatte 32 im Bereich des Eingriffsabschnitts 33 in Umfangrichtung angeordnete, längsaxiale Fortsätze 41 auf, die komplementär zu den Ausnehmungen 17 der Achsverzahnung 13 ausgebildet sind. Die längsaxialen Fortsätze 41 und die komplementären Ausnehmungen 17 sind vorzugsweise trapezförmig gestaltet, so dass die längsaxialen Fortsätze 41 selbstzentrierend in die Ausnehmungen 17 einführbar sind. Im Bereich des Eingriffsabschnitts 33 kann die Adapterplatte 32 verstärkt sein, insbesondere eine erhöhte Plattenstärke aufweisen. Vorzugsweise fluchtet die radiale Außenfläche der Adapterplatte 32 mit der radialen Außenfläche des ringförmigen Vorsprungs 14 des Achsrohrs 10.

Die Adapterverzahnung 34 greift in die Achsverzahnung 13 ein, wobei eine drehfeste, formschlüssige Verbindung zwischen dem Achsrohr 10 und der Adapterplatte 32 erzeugt wird. Die Formschlussverbindung 15 ist vorzugsweise durch das Ineinandergreifen der Achsverzahnung 13 und der Adapterverzahnung 34 realisiert. Zur längsaxialen Sicherung der Formschlussverbindung 15 weist die Adapterplatte 32 im Eingriffsabschnitt 33 radial nach außen vorstehende Nasen 42 auf, die in Umfangrichtung der Adapterplatte 32 beabstandet voneinander angeordnet sind. Die Nasen 42 sind jeweils mit den radialen Vorsprüngen 18 des Achsrohrs 10 ausgerichtet und umfassen eine Bohrung 43, die mit einer Aufnahmebohrung in dem jeweils zugeordneten radialen Vorsprung 18 fluchtet. Die Aufnahmebohrung im radialen Vorsprung 18 kann als Gewindebohrung ausgeführt sein, so dass die Nasen 42 mit den radialen Vorsprüngen 18 verschraubbar sind. Auf diese Weise wird die Formschlussverbindung 15 axial gesichert. Dies gewährleistet, dass ein ständiger Eingriff zwischen der Adapterverzahnung 34 und der Achsverzahnung 13 besteht.

Zwischen dem Eingriffsabschnitt 33 und dem Klemmabschnitt 35 erstreckt sich in der Adapterplatte 32 ein Distanzabschnitt 38. Der Distanzabschnitt 38 kann durch die Nasen 42 des Eingriffsabschnitts 33 einerseits und die Flansche 40 des Klemmabschnitts 35 andererseits längsaxial begrenzt sein. Der Distanzabschnitt 38 sorgt für einen konstanten Abstand zwischen der Formschlussverbindung 15 und der Klemmverbindung 16. Um die in der Formschlussverbindung 15 vom Achsrohr 10 auf die Adapterplatte 32 übertragenen Drehmomente bzw. Torsionsmomente gut weiterzugeben, weist der Distanzabschnitt 38 vorzugsweise eine Materialverstärkung 39 auf. Die Materialverstärkung 39 erstreckt sich auf dem Außenumfang der Adapterplatte 32.

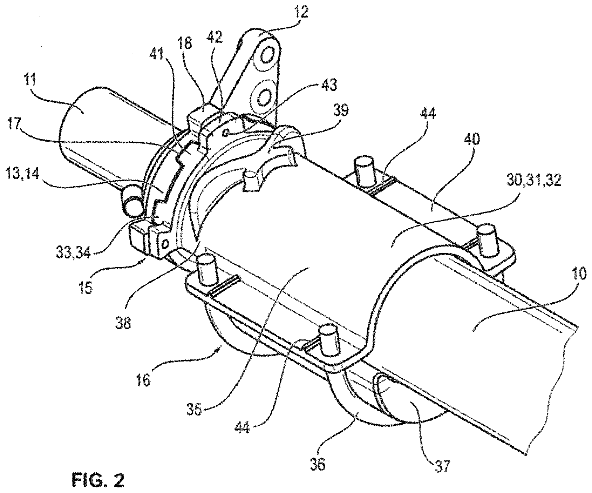

Wie in Fig. 2 gut erkennbar ist, bildet die Materialverstärkung 39 im Wesentlichen eine X-förmige Geometrie, wobei zwei X-Schenkel mit gemeinsamen, verbindenden Winkel, gegenüber zwei weiteren X-Schenkeln verlängert sind. Die verlängerten X-Schenkel erstrecken sich vorzugsweise in Richtung des Eingriffsabschnitts 33. Die Materialverstärkung 39 versteift den Distanzabschnitt 38 und vermeidet so eine Torsion der Adapterplatte 32.

Der Achslenker 20 weist eine Achsrohraufnahme 22 auf, die im Wesentlichen halbbogenförmig ausgebildet ist. Die Achsrohraufnahme 22 ist zur Aufnahme des Achsrohrs 10 angepasst. Entlang der Achsrohraufnahme 22 erstreckt sich im Achslenker 20 ein Schlitz 25, der im montierten Zustand des Achslenkers 20 parallel zum Achsrohr 10 ausgerichtet ist. Der Schlitz 25 dient zur Aufnahme eines Flansches 40 der Adapterplatte 32. Auf diese Weise ist der Achslenker 20 formschlüssig und drehfest mit der Adapterplatte 32 verbunden. Zusätzlich kann die Adapterplatte 32 mit dem Achslenker 20 schweißverbunden sein. Im Bereich des Schwenkabschnitts 23 liegt der Achslenker 20 vorzugsweise auf einem weiteren Flansch 40 der Adapterplatte 32 auf. Es ist auch möglich, dass sich im Bereich des Schwenkabschnitts 23 ein weiterer Schlitz 25 erstreckt, in den der Flansch 40 eingreift.

Wie in Fig. 2 gut erkennbar ist, weisen die Flansche 40 jeweils zwei Rippen 44 auf, die sich senkrecht zur Längsrichtung der Adapterplatte 32 erstrecken. Die Rippen 44 bilden einerseits eine Montagehilfe zur Anordnung des Achslenkers 20 auf der Adapterplatte 32. Andererseits bilden die Rippen 44 eine längsaxiale Sicherung des Achslenkers 20 bezüglich der Adapterplatte 32.

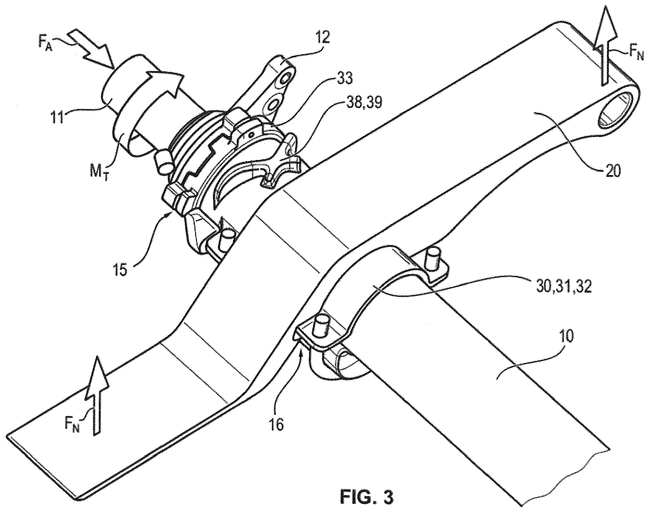

In Fig. 3 sind hauptsächlich auf die Achse wirkende Kräfte schematisch dargestellt. Die Kräfte entstehen in unterschiedlichen Fahrsituationen. Beispielsweise wird bei Kurvenfahrt eine längsaxial zum Achsrohr 10 ausgerichtete Axialkraft F_{A} auf das Achsrohr 10 aufgebracht. Die Axialkraft F_{A} wird vorwiegend durch die Formschlussverbindung 15 auf die Adapterplatte 32 übertragen. Von der Adapterplatte 32 verläuft der Kraftfluss für die Axialkraft F_{A} in den Achslenker 20, der die Belastung in den Nutzfahrzeugrahmen ableitet.

Bei der Kurvenfahrt entsteht ferner ein Torsionsmoment M_{T}, da die kurvenäußere Seite des Nutzfahrzeugs stärker einfedert als die kurveninnere Seite. Dadurch wird die gesamte Achse tordiert. Das Torsionsmoment M_{T} wirkt auf das Achsrohr 10 ein. Abgeleitet wird das Torsionsmoment M_{T} vorwiegend durch die Formschlussverbindung 15 auf die Adapterplatte 32. Das in den Eingriffsabschnitt 33 durch die Formschlussverbindung 15 eingeleitete Torsionsmoment M_{T} wird über den Distanzabschnitt 38 in den Klemmabschnitt 35 übertragen. Die Materialverstärkung 39 im Distanzabschnitt 38 ist dabei derart angepasst, dass eine gute Kraftweiterleitung möglich ist. Insbesondere vermeidet die Materialverstärkung 39 eine Verbiegung der Adapterplatte 32 und somit eine Aufnahme bzw. Vernichtung des Torsionsmoments. Das Torsionsmoment M_{T} wird vielmehr über die Adapterplatte 32 in den Achslenker 20 eingeleitet. Dies erfolgt über die formschlüssige Verbindung zwischen dem Klemmabschnitt 35 und dem Achslenker 20.

Durch die Gewichtskraft des Nutzfahrzeugs wirken auf die Achse ferner Normalkräfte, die im Wesentlichen eine vertikale Ausrichtung aufweisen. Die Normalkräfte sind nicht konstant, sondern werden durch Bremsvorgänge, Beschleunigungsvorgänge und Straßenunebenheiten oder dergleichen dynamisch beeinflusst. Die Normalkräfte F_{N} wirken im Wesentlichen senkrecht zur Längsachse des Achsrohrs 10 auf das Achsrohr ein und werden vorwiegend durch die Klemmverbindung 16 in den Achslenker 20 übertragen. Da die Adapterplatte 32 klemmend mit dem Achsrohr 10 verbunden ist und im Wesentlichen flächenbündig in der Achsrohraufnahme 22 des Achslenkers 20 angeordnet ist, werden die Normalkräfte nahezu verlustfrei durch die Adapterplatte 32 in den Achslenker 20 geleitet.

Aus der Darstellung gemäß Fig. 3 ist gut erkennbar, dass durch die Verwendung der Adapterplatte 32 die Formschlussverbindung 15, die einerseits Torsionsmomente M_{T} und andererseits durch den Fahrbetrieb verursachte Drehmomente überträgt, von der Klemmverbindung 16 getrennt ist, die hauptsächlich lineare Normalkräfte F_{N} aufnimmt. Auf diese Weise wird die Klemmverbindung 16 von den auftretenden Drehmomenten und Torsionsmomenten entlastet, was die Stabilität der Achse insgesamt verbessert.

Die erfindungsgemäße Achse ist besonders einfach aufgebaut. Die Anzahl der einzelnen Bauteile der Achse ist vergleichsweise gering, so dass die Herstellung vereinfacht ist. Insbesondere ist zur Verbindung zwischen dem Achsrohr 10 und dem Achslenker 20 nur ein einziges Kraftübertragungsmittel 30, nämlich die Adapterplatte 32, vorgesehen. Dabei ist das Kraftübertragungsmittel 30 so angepasst, dass die Übertragung von im Fahrbetrieb auftretenden Momenten von der Übertragung von im Fahrbetrieb auftretenden linearen Kräften weitgehend getrennt ist.

Ferner kann bei der erfindungsgemäßen Achse auf Schweißverbindungen zumindest zwischen dem Achsrohr 10 und dem Kraftübertragungsmittel 30 bzw. Adapter 31 verzichtet werden, da die vorgeschlagene Formschlussverbindung 15 in Kombination mit der Klemmverbindung 16 ausreichend stabil ist. Der Verzicht auf Schweißverbindungen ermöglicht die Beschichtung der Einzelbauteile vor der Montage. Dies kommt der Korrosionsbeständigkeit zugute. Außerdem können Einzelbauteile in unterschiedlichen Werken hergestellt werden, wodurch die Effizienz der Serienfertigung gesteigert werden kann.

Insgesamt ist die erfindungsgemäße Achse kostengünstig herstellbar. Die Achsverzahnung 13 kann beispielsweise bei der mechanischen Bearbeitung des des Bremssattelträgers 12 ausgebildet werden. Da der Bremssattelträger 12 ohnehin mechanisch bearbeitet wird, ist lediglich ein weiterer Verfahrensschritt zu ergänzen, um die Achsverzahnung 13 herzustellen. Die Montage wird durch die Formschlussverbindung 15 erheblich vereinfacht, da ein aufwendiges Ausrichten der Bauteile zueinander vermieden wird. Die Ausrichtung erfolgt bereits durch das passende Ineinandergreifen von Adapterverzahnung 34 und Achsverzahnung 13. Auch die Rippen 44 auf den Flanschen 40 dienen dem passgenauen Zusammenfügen der Achse, insbesondere der Adapterplatte 32, mit dem Achslenker 20.

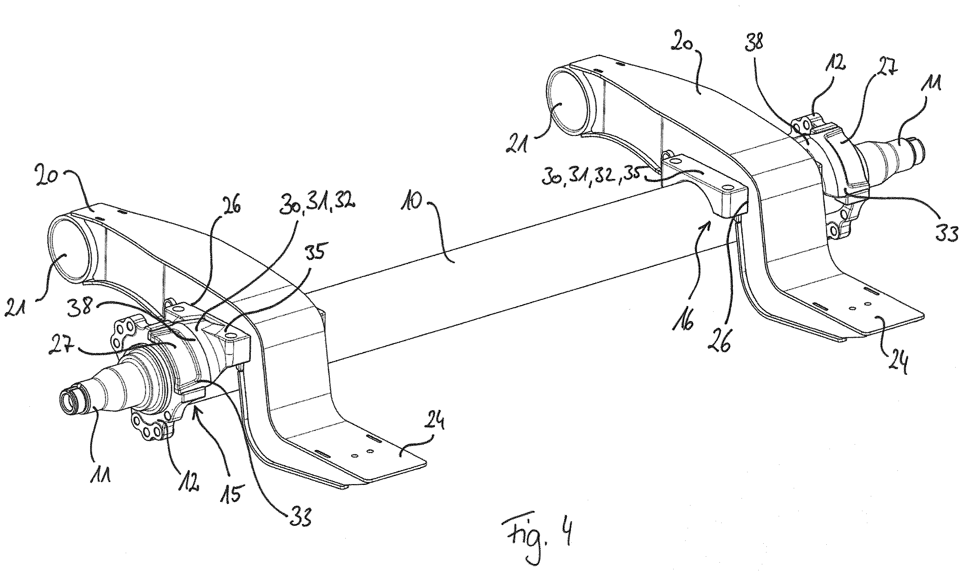

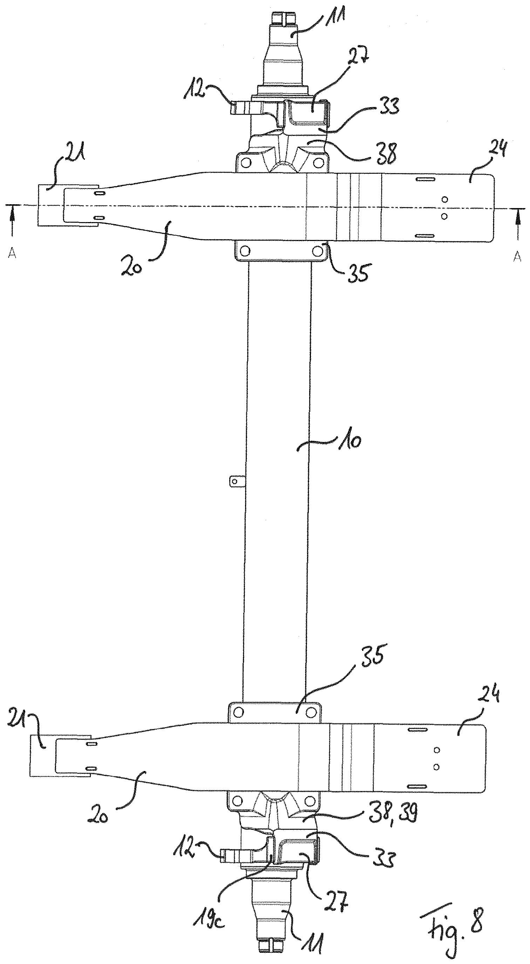

In den Figuren 4 bis 9 ist ein weiteres Ausführungsbeispiel der Erfindung gezeigt. Fig. 4 zeigt in einer perspektivischen Ansicht eine Achse mit einem Achsrohr 10 und zwei Achslenkern 20. Das Achsrohr 10 geht an den Längsenden in Achsschenkel 11 über. Das Achsrohr 10 und der Achsschenkel 11 können einstückig ausgebildet oder fest miteinander verbunden sein. Bei dem vorliegenden Ausführungsbeispiel ist das Achsrohr 10 zylinderförmig gestaltet. Mit anderen Worten weist das Achsrohr 10 einen kreisförmigen Querschnitt auf. Das Achsrohr 10 kann durch ein Hohlrohr oder als Vollmaterial gebildet sein.

Zwischen dem Achsschenkel 11 und dem Achslenker 20 ist ein Bremssattelträger 12 angeordnet. Der Bremssattelträger 12 kann einteilig mit dem Achsrohr 10 ausgebildet sein. Alternativ kann der Bremssattelträger 12 fest mit dem Achsrohr 10 verbunden, insbesondere verschweißt, sein. Der Bremssattelträger 12 weist mehrere Durchgangsbohrungen auf, die die Befestigung von Bremssätteln ermöglichen. Die Bremssättel wirken dann mit an einem Rad oder an einer Nabe für ein Rad befestigten Bremsscheiben zusammen, um ein Nutzfahrzeug, das mit der dargestellten Achse ausgerüstet ist, verzögern zu können.

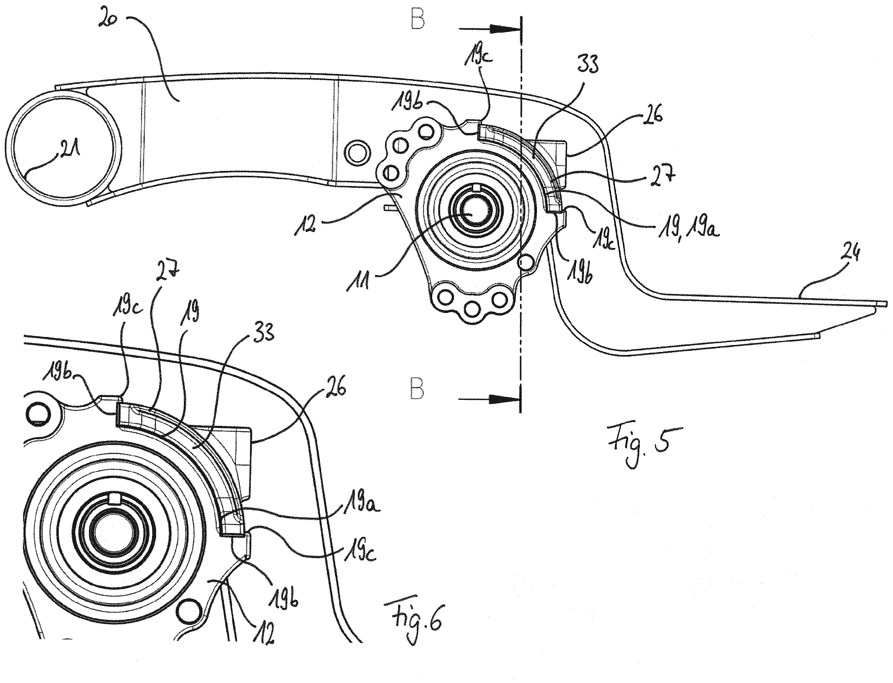

In der Seitenansicht gemäß Fig. 5 ist gut erkennbar, dass der Bremssattelträger 12 eine im Wesentlichen viertelkreisförmige Aussparung 19 aufweist. Die Aussparung 19 umfasst einen Boden 19a, der im Wesentlichen teilkreisförmig gekrümmt ist. Senkrecht zum Boden 19a erstrecken sich beidseitig Seitenwände 19b, die im Wesentlichen radial bezogen auf die Längsachse des Achsrohrs 10 ausgerichtet sind. Oberhalb der Seitenwände 19b ist jeweils ein Überhang 19c in der Aussparung 19 ausgeformt. Der Überhang 19c bildet mit der Seitenwand 19b und dem Boden 19a jeweils ein im Wesentlichen c-förmiges bzw. u-förmiges Schienenprofil. Die Funktion des Überhangs 19c wird später näher erläutert.

Im Allgemeinen kann vorgesehen sein, dass anstelle des Bremssattelträgers 12 ein anderes Zusatzelement fest mit dem Achsrohr 10 verbunden, insbesondere verschweißt, ist. Das Zusatzelement kann beispielsweise durch einen Ring gebildet sein. Der Ring weist ebenfalls die Aussparung 19 zur formschlüssigen Fixierung des Adapters 31 auf. Die Aussparung 19 umfasst generell wenigstens einen, insbesondere zwei, Überhänge 19c, die ein Abheben des Eingriffsabschnitts 33 von der Adapterplatte 32 verhindert. Ein solches Abheben bzw. Aufbiegen der Adapterplatte 32 kann beispielsweise eine Folge von Korrosionskräften sein.

In Fig. 4 ist erkennbar, dass die Achse einen Adapter 31 aufweist, der das Kraftübertragungsmittel 30 bildet. Der Adapter 31 bzw. die Adapterplatte 32 ist vorzugsweise als Gussteil ausgebildet. Insofern kann der Adapter 31 auch als Gussschale bezeichnet werden. Die Adapterplatte 32 weist im Querschnitt eine Teilkreisform auf, die vorzugsweise der Teilkreisform der Aussparung 19 im Bremssattelträger 12 entspricht. Im Allgemeinen können der Adapter 31 und die Aussparung 19 des Bremssattelträgers 12 teilkreisförmig ausgebildet sein, wobei die Teilkreisform wenigstens einen Achtelkreis und höchstens einen Halbkreis beschreibt.

Der Adapter 31 weist einen Eingriffsabschnitt 33, einen Distanzabschnitt 38 und einen Klemmabschnitt 35 auf. Im Bereich des Klemmabschnitts 35 ist der Adapter 31 mit dem Achsrohr 10 verklemmt. Dazu weist die Adapterplatte 32 vorzugsweise Durchgangsbohrungen im Klemmabschnitt 35 auf, die Federbügel 36 aufnehmen können. Die Federbügel 36 umgreifen das Achsrohr 10 und fixieren die Adapterplatte 32 so klemmend am Achsrohr 10.

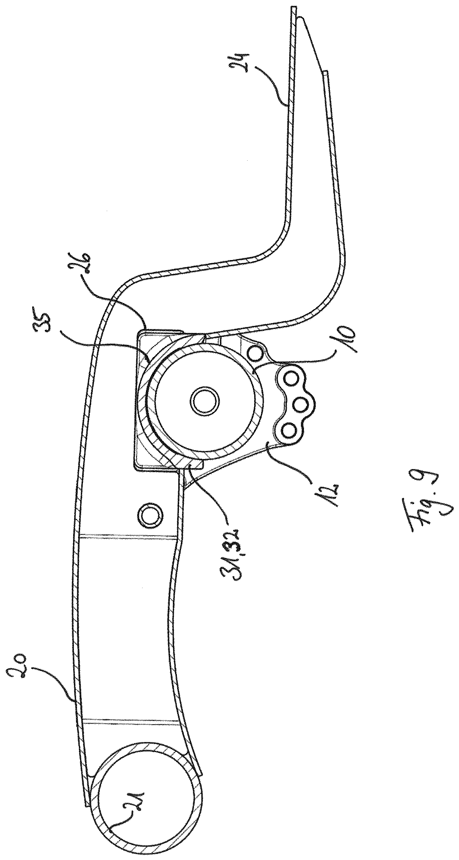

Der Klemmabschnitt 35 weist vorzugsweise eine im Wesentlichen rechteckige Außenkontur auf. Wie in Fig. 4 gut erkennbar ist, ist der Klemmabschnitt mit einer flachen Oberseite und einer teilkreisförmig gewölbten Unterseite ausgebildet. Die Unterseite nimmt das Achsrohr 10 auf. Zur formschlüssigen Verbindung des Klemmabschnitts 35 des Adapters 31 mit dem Achslenker 20 weist der Achslenker 20 eine entsprechende rechteckförmige Ausformung 26 auf. Die Ausformung 26 ist gut in der Querschnittsansicht gemäß Fig. 9 erkennbar.

Der Adapter 31 bzw. die Adapterplatte 32 umfasst ferner einen Eingriffsabschnitt 33. Der Eingriffsabschnitt 33 umfasst eine teilkreisförmige Kontur bzw. einen teilkreisförmigen Querschnitt. Der Eingriffsabschnitt 33 zeigt in dem dargestellten Ausführungsbeispiel gemäß Figuren 4 bis 9 eine Viertelkreisform. Der Eingriffsabschnitt 33 ist insbesondere komplementär zur Aussparung 19 im Bremssattelträger 12 ausgebildet. Das bedeutet, dass der Eingriffsabschnitt 33 eine Wandstärke aufweist, die zumindest in Randbereichen des Eingriffsabschnitts 33 der Höhe der Seitenwände 19b der Aussparung 19 am Bremssattelträger 12 entspricht. Insofern ist der Eingriffsabschnitt 33 in die Aussparung 19 des Bremssattelträgers 12 einschiebbar. Die Überhänge 19c, die in der Aussparung 19 ausgebildet sind, verhindern ein Aufbiegen des Eingriffsabschnitts 33. Im Allgemeinen ist der Eingriffsabschnitt 33 formschlüssig in die Aussparung 19 einsetzbar bzw. einschiebbar.

Der Eingriffsabschnitt 33 weist ferner eine Materialschwächung 27 auf. Die Materialschwächung 27 zeigt sich durch eine reduzierte Wandstärke in einem mittleren Bereich des Eingriffsabschnitts 33. Die reduzierte Wandstärke trägt zur Gewichtsersparnis bei.

Der Adapter 31 bzw. die Adapterplatte 32 ist bei dem Ausführungsbeispiel gemäß Figuren 4 bis 9 insofern mit einer Adapterverzahnung 34 ausgebildet, als der Eingriffsabschnitt 33 im Wesentlichen einen einzigen Zahn bildet, der in die entsprechende Aussparung 19 im Bremssattelträger 12 formschlüssig eingreift. Durch die Verwendung eines einzigen Zahns als Eingriffsabschnitt 33 wird Material zur Produktion des Adapters 31 eingespart. Dies sorgt für reduzierte Produktionskosten und reduziert das Gewicht der Achse.

Der Eingriffsabschnitt 33 bildet mit der Aussparung 19 die Formschlussverbindung 15. Die Klemmverbindung 16 erfolgt über Federbügel, die mit dem Klemmabschnitt 35 des Adapters 31 zusammenwirken und so den Adapter 31 klemmend mit dem Achsrohr 10 verbinden. Der Achslenker 20 ist wiederum formschlüssig mit dem Adapter 31 verbunden, da der rechteckförmige Klemmabschnitt formschlüssig in die rechteckförmige Ausformung 26 im Achslenker 20 eingreift.

Zwischen dem Klemmabschnitt 35 und dem Eingriffsabschnitt 33 weist der Adapter 31 bzw. die Adapterplatte 32 einen Distanzabschnitt 38 auf. Der Distanzabschnitt 38 wird einerseits durch den Eingriffsabschnitt 33 und andererseits durch den Klemmabschnitt 35 begrenzt. Im montierten Zustand des Adapters 31 erstreckt sich der Distanzabschnitt 38 vom Bremssattelträger 12 zum Achslenker 20.

Der Distanzabschnitt 38 weist eine Materialverstärkung 39 auf, wobei die Materialverstärkung 39 dadurch gebildet ist, dass die Wandstärke der Adapterplatte 32 im Bereich des Distanzabschnitts 38 erhöht ist. Mit anderen Worten ist die Wandstärke im Distanzabschnitt 38 insgesamt größer als im Eingriffsabschnitt 33. Insbesondere kann vorgesehen sein, dass die Adapterplatte 32 im Eingriffsabschnitt 33 eine sich nach außen bzw. zur Spitze der Adapterplatte 32 auslaufende, d.h. sich reduzierende, Wandstärke aufweist. In Richtung zum Achsschenkel 11 verjüngt sich somit der Eingriffsabschnitt 33 in Bezug auf die Wandstärke.

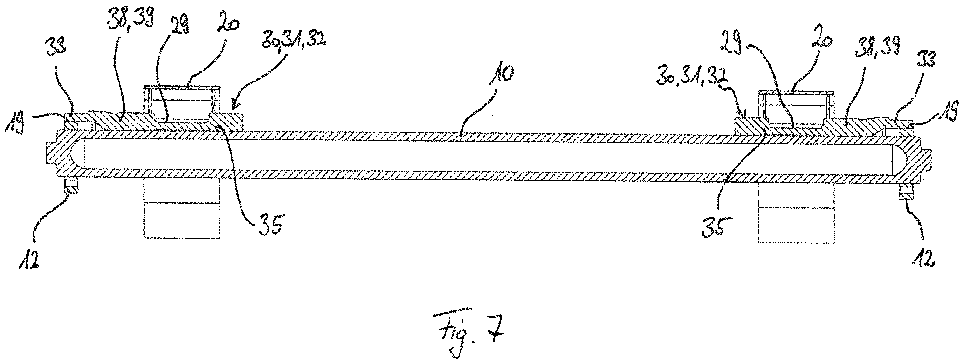

In Fig. 7 ist ein Längsschnitt durch die Achse gezeigt. Daran ist erkennbar, dass der Adapter 31 im Bereich des Eingriffsabschnitts 33 eine deutlich kleinere Wandstärke als im Bereich des Distanzabschnitts 38 aufweist. Insbesondere ist der Eingriffsabschnitt 33 derart geformt, dass zwischen dem Eingriffsabschnitt 33 und dem Achsrohr 10 ein Abstand besteht. Der Abstand entspricht der Höhe des Bremssattelträgers 12 im Bereich der Aussparung 19. So kann der Eingriffsabschnitt 33 gut in die Aussparung 19 gelangen.

Ferner ist in Fig. 7 erkennbar, dass der Klemmabschnitt 35 eine Einwölbung 28 aufweist, die sich zwischen zwei Formschlussflanschen 29 des Klemmabschnitts 35 erstreckt. Die Einwölbung 28 verläuft in Umfangsrichtung um das Achsrohr 10. Die Länge der Einwölbung 28 (gemessen entlang der Längsachse des Achsrohrs 10) ist kleiner als die Länge der Ausformung 26 des Achslenkers 20. Damit ist sichergestellt, dass die rechteckigen Formschlussflansche 29 im Eingriff mit der rechteckigen Ausformung 26 stehen, um eine formschlüssige Verbindung zwischen dem Adapter 32 und dem Achslenker 20 zu bilden.

Der Eingriffsabschnitt 33 bzw. der einzige Zahn der Adapterverzahnung 34 weist bei dem Ausführungsbeispiel gemäß Figuren 4 bis 9 eine Querschnittskontur in Form eines Viertelkreises auf. Dabei erstreckt sich der Viertelkreis vorzugsweise zwischen einer horizontalen und einer vertikalen Ebene, wobei sowohl die horizontale, als auch die vertikale Ebene jeweils die Längsachse des Achsrohrs 10 schneiden. Insofern kann der Eingriffsabschnitt 33 nur in einem einzigen Quadranten angeordnet sein, der durch ein Koordinatensystem festgelegt wird, dessen Zentrum durch die Längsachse des Achsrohrs 10 gebildet ist. Vorzugsweise erstreckt sich der Eingriffsabschnitt 32 durch den ersten Quadranten des Koordinatensystems.

Der Vorteil der vorliegenden Erfindung besteht einerseits darin, dass durch die Adapterplatte 32 die Stabilität der Achsanbindung, insbesondere die Stabilität der Verbindung zwischen Achsrohr 10 und Achslenker 20, erhöht wird. Ein weiterer Vorteil der Erfindung besteht darin, dass einzelne Bauteile der Achse einfach austauschbar sind. Insbesondere kann das Achsrohr 10 einfach ersetzt werden, wodurch der Wartungsaufwand erheblich reduziert wird. Beispielsweise sind zu einem Austausch des Achsrohrs 10 nur die beiden Federbügel 36 zu lösen. Dadurch wird die Adapterplatte 32 frei und kann aus der Aussparung 19 im Bremssattelträger 12 herausgeschoben werden. Durch das Herausschieben der Adapterplatte 32 aus der Aussparung 19 wird das Achsrohr 10 frei und kann ausgetauscht werden.

### Bezugszeichenliste

- 10: Achsrohr
- 11: Achsschenkel
- 12: Bremssattelträger
- 13: Achsverzahnung
- 14: ringförmiger Vorsprung
- 15: Formschlussverbindung
- 16: Klemmverbindung
- 17: Ausnehmung
- 18: radialer Vorsprung
- 19: Aussparung
- 19a: Boden
- 19b: Seitenwand
- 19c: Überhang
- 20: Achslenker
- 21: Achslenkerlager
- 22: Achsrohraufnahme
- 23: Schwenkabschnitt
- 24: Federabschnitt
- 25: Schlitz
- 26: Ausformung
- 27: Materialschwächung
- 28: Einwölbung
- 30: Kraftübertragungsmittel
- 31: Adapter
- 32: Adapterplatte
- 33: Eingriffsabschnitt
- 34: Adapterverzahnung
- 35: Klemmabschnitt
- 36: Federbügel
- 37: Anpressteil
- 38: Distanzabschnitt
- 39: Materialverstärkung
- 40: Flansch
- 41: längsaxialer Fortsatz
- 42: Nase
- 43: Bohrung
- 44: Rippe
- F_{A}: Axialkraft
- F_{N}: Normalkraft
- M_{T}: Torsionsmoment

## Patentansprüche

1. Achse für ein Nutzfahrzeug mit einem Achsrohr (10) und wenigstens einem Achslenker (20), der durch wenigstens ein Kraftübertragungsmittel (30) mit dem Achsrohr (10) verbunden ist,
**dadurch gekennzeichnet, dass**
das Kraftübertragungsmittel (30) mit dem Achsrohr (10) durch eine Formschlussverbindung (15) zur Übertragung eines Moments und durch eine Klemmverbindung (16) zur Übertragung einer Normalkraft verbunden sind, wobei die Formschlussverbindung (15) und die Klemmverbindung (16) in Längsrichtung des Achsrohrs (10) voneinander beabstandet angeordnet sind.

2. Achse nach Anspruch 1,
**dadurch gekennzeichnet, dass**
zwischen dem Achsrohr (10) und dem Achslenker ein Adapter (31), insbesondere eine Adapterplatte (32), angeordnet ist, der das Kraftübertragungsmittel (30) bildet.

3. Achse nach Anspruch 2,
**dadurch gekennzeichnet, dass**
der Adapter (31) einen Eingriffsabschnitt (33) aufweist, der die Formschlussverbindung (15) mit dem Achsrohr (10) bildet und durch einen Distanzabschnitt (38) von einem Klemmabschnitt (35) des Adapters (31) getrennt ist, der die Klemmverbindung (16) mit dem Achsrohr (10) bildet.

4. Achse nach Anspruch 2 oder 3,
**dadurch gekennzeichnet, dass**
die Formschlussverbindung (15) eine Verzahnung und/oder eine Stiftverbindung und/oder eine Passfederverbindung und/oder eine Schraubverbindung und/oder eine Bolzenverbindung umfasst.

5. Achse nach einem der Ansprüche 2 bis 4,
**dadurch gekennzeichnet, dass**
der Adapter (31), insbesondere der Eingriffsabschnitt (33), eine Adapterverzahnung (34) aufweist, die in eine komplementäre Achsverzahnung (13) des Achsrohrs (10) eingreift.

6. Achse nach Anspruch 5,
**dadurch gekennzeichnet, dass**
die Adapterverzahnung (34) und die Achsverzahnung (13) koaxial zu einer Längsachse des Achsrohrs (10) ineinandergreifen.

7. Achse nach einem der vorhergehenden Ansprüche,
**dadurch gekennzeichnet, dass**
die Formschlussverbindung (15), insbesondere die Achsverzahnung (13), an einem Achsschenkel (11) und/oder einem Bremssattelträger (12) des Achsrohrs (10) angeordnet ist.

8. Achse nach einem der Ansprüche 2 bis 7,
**dadurch gekennzeichnet, dass**
der Adapter (31), insbesondere der Klemmabschnitt (35), mit wenigstens einem Federbügel (36) verbunden ist, der das Achsrohr (10) umgreift.

9. Achse nach Anspruch 8,
**dadurch gekennzeichnet, dass**
zwischen dem Federbügel (36) und dem Achsrohr (10) ein Anpressteil (37) angeordnet ist.

10. Achse nach Anspruch 9,
**dadurch gekennzeichnet, dass**
der Distanzabschnitt (38) eine Materialverstärkung (39) aufweist.

11. Achse nach einem der Ansprüche 2 bis 10,
**dadurch gekennzeichnet, dass**
der Adapter (31), insbesondere die Adapterplatte (32), zumindest teilweise halbrohrförmig ausgebildet ist.

12. Achse nach einem der Ansprüche 2 bis 11,
**dadurch gekennzeichnet, dass**
der Adapter (31), insbesondere der Klemmabschnitt (34), mit dem Achslenker (20) fest verbunden, insbesondere verschweißt und/oder verklemmt, ist.

13. Achse nach einem der vorhergehenden Ansprüche,
**dadurch gekennzeichnet, dass**
der Achslenker (20) zur formschlüssigen Verbindung mit dem Adapter (31) einen Schlitz (25) aufweist, in den im montierten Zustand des Adapters (31) ein Flansch (40) des Adapters (31), insbesondere Adapterplatte (32), eingreift.

14. Achsaggregat für ein Nutzfahrzeug mit einer Achse nach einem der vorhergehenden Ansprüche.

15. Nutzfahrzeug mit einer Achse und/oder einem Achsaggregat nach einem der vorhergehenden Ansprüche.

16. Achslenker (20) für eine Achse nach einem der Ansprüche 1 bis 13 mit einer, insbesondere im Wesentlichen rechteckigen, Ausformung (26) zur formschlüssigen Aufnahme eines mit einem Achsrohr (10) verbundenen Adapters (31), wobei die Ausformung (26) im Wesentlichen rechtwinklig zu einer Längserstreckung des Achslenkers (20) ausgebildet ist.

## Claims

1. An axle for a commercial vehicle, having an axle tube (10) and at least one axle link (20), which is connected to the axle tube (10) by at least one force-transmitting means (30),
**characterised in that**
the force-transmitting means (30) is connected to the axle tube (10) by an positive locking connection (15) for transmitting a torque and by a clamping connection (16) for transmitting a normal force, wherein the positive locking connection (15) and the clamping connection (16) are spaced from each other in the longitudinal direction of the axle tube (10).

2. The axle according to claim 1,
**characterised in that**
an adapter (31), in particular an adapter plate (32), which forms the force-transmitting means (30), is arranged between the axle tube (10) and the axle link.

3. The axle according to claim 2,
**characterised in that**
the adapter (31) has an engagement section (33), which forms the positive locking connection (15) with the axle tube (10) and is separated by a spacer section (38) from a clamping section (35) of the adapter (31), which forms the clamping connection (16) to the axle tube (10).

4. The axle according to claim 2 or 3,
**characterised in that**
the positive locking connection (15) comprises toothing and/or a pin connection and/or a feather key connection and/or a screw connection and/or a bolt connection.

5. The axle according to any one of claims 2 to 4,
**characterised in that**
the adapter (31), in particular the engagement section (33), has adapter toothing (34), which engages in a complementary axle toothing (13) of the axle tube (10).

6. The axle according to claim 5,
**characterised in that**
the adapter toothing (34) and the axle toothing (13) engages in one another coaxially to a longitudinal axis of the axle tube (10).

7. The axle according to any one of the preceding claims,
**characterised in that**
the positive locking connection (15), in particular the axle toothing (13), is arranged on an axle arm (11) and/or a brake calliper support (12) of the axle tube (10).

8. The axle according to any one of claims 2 to 7,
**characterised in that**
the adapter (31), in particular the clamping section (35), is connected to at least one spring clip (36), which fits around the axle tube (10).

9. The axle according to claim 8,
**characterised in that**
a pressure part (37) is arranged between the spring clip (36) and the axle tube (10).

10. The axle according to claim 9,
**characterised in that**
the spacer section (38) has a material reinforcement (39).

11. The axle according to any one of claims 2 to 10,
**characterised in that**
the adapter (31), in particular the adapter plate (32), is at least partially half-tube-shaped.

12. The axle according to any one of claims 2 to 11,
**characterised in that**
the adapter (31), in particular the clamping section (34), is connected firmly, in particular welded and/or clamped, to the axle link (20).

13. The axle according to any one of the preceding claims,
**characterised in that**
the axle link (20) has a slot (25) for positive locking connection to the adapter (31), in which slot a flange (40) of the adapter (31), in particular adapter plate (32), engages when the adapter (31) is in the mounted state.

14. An axle assembly for a commercial vehicle having an axle according to any one of the preceding claims.

15. A commercial vehicle having an axle and/or an axle assembly according to any one of the preceding claims.

16. An axle link (20) for an axle according to any one of claims 1 to 13, having an in particular substantially rectangular formation (26) for positive lockingly receiving an adapter (31) connected to an axle tube (10), wherein the formation (26) is formed substantially at right angles to a longitudinal extension of the axle link (20).

## Revendications

1. Axe, destiné à un véhicule utilitaire, pourvu d'un tube d'essieu (10) et d'au moins un guide d'essieu (20), qui est assemblé par l'intermédiaire d'au moins un moyen de transmission de force (30) avec le tube d'essieu (10),
**caractérisé en ce que**
le moyen de transmission de force (30) est assemblé avec le tube d'essieu (10) par un assemblage par complémentarité de forme (15) pour la transmission d'un couple et par un assemblage par serrage (16) pour la transmission d'une force normale, l'assemblage par complémentarité de forme (15) et l'assemblage par serrage (16) étant placés en étant écartés l'un de l'autre dans la direction longitudinale du tube d'essieu (10).

2. Axe selon la revendication 1,
**caractérisé en ce**
**qu'**entre le tube d'essieu (10) et le guide d'essieu est placé un adaptateur (31), notamment une plaque adaptatrice (32), qui constitue le moyen de transmission de force (30).

3. Axe selon la revendication 2,
**caractérisé en ce que**
l'adaptateur (31) comporte un segment d'engagement (33), qui constitue l'assemblage par complémentarité de forme (15) avec le tube d'essieu (10) et qui est séparé par un segment distanceur (38) d'un segment de serrage (35) de l'adaptateur (31) qui constitue l'assemblage par serrage (16) avec le tube d'essieu (10).

4. Axe selon la revendication 2 ou 3,
**caractérisé en ce que**
l'assemblage par complémentarité de forme (15) comprend une denture et/ou un assemblage par goupille et/ou un assemblage par clavette et/ou un assemblage par vissage et/ou un assemblage par boulonnage.

5. Axe selon l'une quelconque des revendications 2 à 4,
**caractérisé en ce que**
l'adaptateur (31), notamment le segment d'engagement (33) comporte une denture d'adaptateur (34) qui s'engage dans la denture d'axe (13) du tube d'essieu (10).

6. Axe selon la revendication 5,
**caractérisé en ce que**
la denture d'adaptateur (34) et la denture d'axe (13) s'engrènent l'une dans l'autre de manière coaxiale à un axe longitudinal du tube d'essieu (10).

7. Axe selon l'une quelconque des revendications précédentes,
**caractérisé en ce que**
l'assemblage par complémentarité de forme (15), notamment la denture d'axe (13) est placé(e) sur une fusée d'essieu (11) et/ou sur un support d'étrier de frein (12) du tube d'essieu (10).

8. Axe selon l'une quelconque des revendications 2 à 7,
**caractérisé en ce que**
l'adaptateur (31), notamment le segment de serrage (35) est relié avec au moins un étrier de ressort (36) qui entoure le tube d'essieu (10).

9. Axe selon la revendication 8,
**caractérisé en ce**
**qu'**entre l'étrier de ressort (36) et le tube d'essieu (10) est placée une pièce de pression (37).

10. Axe selon la revendication 9,
**caractérisé en ce que**
le segment distanceur (38) comporte un renfort de matière (39).

11. Axe selon l'une quelconque des revendications 2 à 10,
**caractérisé en ce que**
l'adaptateur (31), notamment la plaque adaptatrice (32) est conçu (e) au moins en partie de forme semi-tubulaire.

12. Axe selon l'une quelconque des revendications 2 à 11,
**caractérisé en ce que**
l'adaptateur (31), notamment le segment de serrage (34) est assemblé de manière fixe, notamment soudé et/ou enserré avec le guide d'essieu (20).

13. Axe selon l'une quelconque des revendications précédentes,
**caractérisé en ce que**
pour l'assemblage par complémentarité de forme avec l'adaptateur (31), le guide d'essieu (20) comporte une encoche (25) dans laquelle, lorsque l'adaptateur (31) est monté s'engage une bride (40) de l'adaptateur (31), notamment de la plaque adaptatrice (32).

14. Essieu, destiné à un véhicule utilitaire, pourvu d'un axe selon l'une quelconque des revendications précédentes.

15. Véhicule, pourvu d'un axe et/ou d'un essieu selon l'une quelconque des revendications précédentes.

16. Guide d'essieu (20), destiné à un axe selon l'une quelconque des revendications 1 à 13, pourvu d'un façonnage (26), notamment sensiblement rectangulaire, destiné à réceptionner par complémentarité de forme un adaptateur (31) assemblé avec un tube d'essieu (10), le façonnage (26) étant conçu sensiblement à angle droit d'une extension longitudinale du guide d'essieu (20).
